# EUROPEAN PATENT APPLICATION

(11) **EP 4 737 120 A1**
(43) Date of publication of application: **06.05.2026**
(21) Application number: 25213654.4
(22) Date of filing: 05.11.2025
(51) Int. Cl.: B32B 33/00

(54) **VARIABLE DAMPING IN COMPOSITE MATERIAL**

(30) Priority: 05.11.2024 US 202418937866
(71) Applicant: RTX Corporation, Farmington, CT 06032 (US)
(72) Inventor: WARREN, Eli, East Hartford, 06118 (US)
(74) Representative: Dehns

(57) **Abstract**

A three-dimensional (3-D) composite structure includes a 3-D lattice structure (32) having a plurality of electrically insulative struts, a matrix phase (38) surrounding the 3-D lattice structure (32), first and second electrically conductive face sheets (34, 35) positioned on two faces of the 3-D lattice structure (32), and a plurality of electrically insulative containment sheets positioned on all faces of the 3-D lattice structure (32) that do not include the first and second face sheets (34, 35). The matrix phase (38) includes an electrorheological material. The first and second face sheets (34, 35) are positioned such that an electric potential applied between the first and second face sheets (34, 35) creates an electric field in the matrix phase (38) that causes a desired reversible alteration to the viscosity of the matrix phase (38). The first and second face sheets (34, 35) and the plurality of containment sheets are collectively configured to contain the matrix phase (38) within the 3-D lattice structure (32).

## Description

### BACKGROUND

The present disclosure relates generally to composite structures and, more particularly, to three-dimensional (3-D) lattice reinforced composite structures.

Aircraft structures, such as engine and fuselage structures, face multiple challenges such as retaining sufficient stiffness to function effectively as structural components while addressing the three dimensional stresses that result from the aircraft maneuvering while in flight. Additionally, it is desirable for such structures to be light weight for fuel efficiency and payload capability.

In some applications, such structures can made from metallic or polymeric foam cores sandwiched between thin sheets of facing materials to form load bearing structures that may include aerodynamic surfaces. In some applications, the foam cores can be replaced by certain repeating 3-D lattice structures, which can be made from metallic or polymeric materials. Given the continued focus on identifying more effective materials for aerospace and other high performance applications, it is desirable to identify further materials that can demonstrate the desired combination of light weight, high stiffness, strength, and toughness.

### SUMMARY

One aspect of the invention includes a three-dimensional (3-D) composite structure that includes a 3-D lattice structure having a plurality of electrically insulative struts, a matrix phase surrounding the 3-D lattice structure, first and second electrically conductive face sheets positioned on two faces of the 3-D lattice structure, and a plurality of electrically insulative containment sheets positioned on all faces of the 3-D lattice structure that do not include the first and second face sheets. The matrix phase includes an electrorheological material. The first and second face sheets are positioned such that an electric potential applied between the first and second face sheets creates an electric field in the matrix phase that causes a desired reversible alteration to the viscosity of the matrix phase. The first and second face sheets and the plurality of containment sheets are collectively configured to contain the matrix phase within the 3-D lattice structure.

Another aspect of the invention includes a method of making a three-dimensional (3-D) composite structure, including the steps of: forming, using additive manufacturing techniques a 3-D lattice structure that comprises a plurality of electrically insulative struts, forming a matrix phase surrounding the 3-D lattice structure, positioning first and second electrically conductive face sheets on two faces of the 3-D lattice structure, and positioning a plurality of electrically insulative containment sheets on all faces of the 3-D lattice structure that do not include the first and second face sheets. The matrix phase comprises an electrorheological material. The first and second face sheets are positioned such that an electric potential applied between the first and second face sheets creates an electric field in the matrix phase that causes a desired reversible alteration to the viscosity of the matrix phase. The first and second face sheets and the plurality of containment sheets are collectively configured to contain the matrix phase within the 3-D lattice structure.

### BRIEF DESCRIPTION OF THE DRAWINGS

Fig. 1 is an isometric view of the stellated octahedron reinforcing lattice cell with a matrix phase.
Fig. 2 is an isometric view of another stellated octahedron reinforcing lattice cell of with a matrix phase.
Fig. 3 is a isometric view of an exemplary composite material of this disclosure that includes electrically conductive face sheets and a matrix comprising an electrorheological material.
Fig. 4 is an isometric view of the stellated octahedron reinforcing lattice cell of Fig. 2 having a stain limiting structure and a matrix phase.
Fig. 5 is an isometric view of a pair of stellated octahedron reinforcing lattice cells having stain limiting structures and a matrix phase.
Fig. 6 is an isometric view of another pair of stellated octahedron reinforcing lattice cells having stain limiting structures and a matrix phase.

### DETAILED DESCRIPTION

Certain aerospace and other high performance applications require structures that can demonstrate a combination of light weight, high stiffness, strength, and toughness. In some applications, such structures can made from metallic or polymeric foam cores sandwiched between thin sheets of facing materials to form load bearing structures that may include aerodynamic surfaces. In other applications, the foam cores can be replaced by certain repeating three-dimensional (3-D) lattices structures, can be made from metallic or polymeric materials.

Another option for such structures is to use a core of repeating 3-D lattice structures filled with an electrorheological (ER) material surrounded by thin sheets of facing material to form reinforced sandwich materials. Such materials be used as load bearing structures and, if desired, may include aerodynamic surfaces. Surrounding or filling the repeating 3-D lattice structures, with a lower modulus, higher toughness ER material creates a composite material with the ER material as a matrix phase and the 3-D lattice structures as a reinforcing phase. Such a composite can be designed to have high strength and stiffness and to have a very high global Poisson's ratio ≥ 1. When loaded in compression, contraction of the lattice elements around the tough matrix phase dissipates compressive forces and results in deformation with small strains. Such a composite will have high stiffness, high strength, and enhanced toughness.

The performance of composite materials made from a repeating 3-D lattice structure having a ER material matrix phase can be enhanced by embedding a strain limiting structure into the matrix phase at or near the center of each 3-D lattice structure. The strain limiting structure, which can have a higher strength than the ER material matrix phase, limits deformation of struts that make up the 3-D lattice structure, resulting in an overall higher ultimate strength for the composite material.

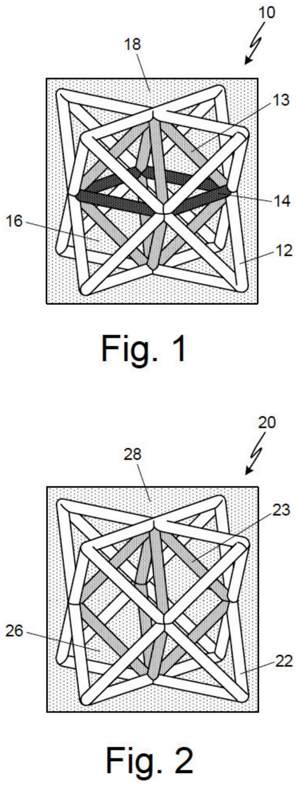

Fig. 1 show a 3-D lattice structure that can be the basis for the repeating 3-D lattice structure used as the reinforcing phase in the composite materials of this disclosure. The repeating 3-D lattice structure can be formed from any electrically insulative material deemed appropriate for a particular application. For example, the repeating 3-D lattice structure can be made from an electrically insulative polymeric material. Fig. 1 shows a 3-D lattice structure **10,** in this case a stellated octahedron, formed with a plurality of struts **12,** including two sets of stiffening struts **13, 14.** As discussed above, the struts **12, 13, 14** can be made from suitable electrically insulative materials and can be formed with additive manufacturing (AM) techniques known in the art. For example, the AM techniques can include powder bed fusion processes (e.g., laser powder bed fusion, electron beam powder bed fusion, etc.), direct ink writing, fused deposition modeling, material jetting, stereolithography, and other processes. Depending on the materials selected for the components of the 3-D lattice structure **10,** it may be desirable to use an AM technique that can deposit multiple materials in a single build campaign.

While the struts **12, 13, 14** are shown with constant diameter circular cross-sections, the cross-sections could also have any other suitable geometric shape (e.g., triangular, rectangular, pentangular, etc.) and may have varying cross-sectional dimensions. In some applications, the combination of materials used to make the struts **12, 13, 14** and the shape and cross-sectional dimensions of the struts **12, 13, 14** can be selected to result in components having mechanical properties, including but not limited to modulus and toughness, deemed appropriate for a particular application. The spaces between the struts **12, 13, 14** include open spaces **16** that are filled with a suitable ER material matrix phase **18** as described further below. In some examples, the ER material matrix phase **18** may have a lower modulus and higher toughness than the material used to make the struts **12, 13, 14.** While the 3-D lattice structure **10** is shown as a stellated octahedron other 3-D geometric shapes formed with a lattice structure can be used as the reinforcing phase in the composite materials of this disclosure.

Fig. 2 shows a 3-D lattice structure **20** similar to that depicted in Fig. 1 with the reinforcing struts **14** removed. The resulting 3-D lattice structure **20** includes a plurality of struts **22** with a single set of stiffening struts **23.** Removing the reinforcing struts **24** from the 3-D lattice structure **10** of Fig. 1 to form 3-D lattice structure **20** is an example of how the 3-D lattice structures of this disclosure can be "tuned" to absorb more energy. Similar to the 3-D lattice structure **10** of Fig. 1, the 3-D lattice structure **20** of Fig. 2 includes open spaces **26** that are filled with a suitable ER material matrix phase **28.** While the 3-D lattice structure **20** is shown as a stellated octahedron other 3-D geometric shapes formed with a lattice structure can be used as the reinforcing phase in the composite materials of this disclosure.

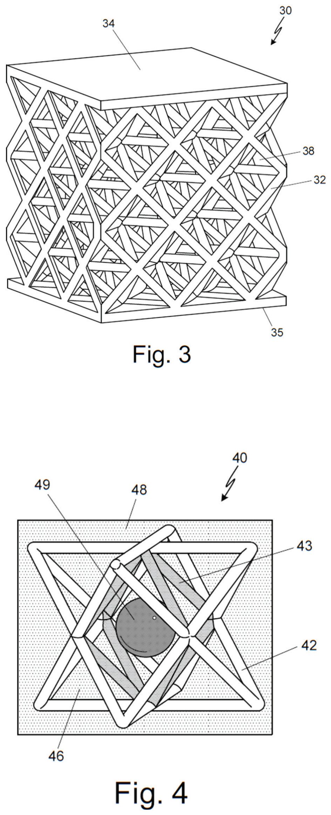

Fig. 3 is a isometric view of an exemplary reinforced structure **30** having a plurality of 3-D lattice structures **32** formed into a sandwich structure having a first face sheet **34** and a second face sheet **35** positioned on two faces of the 3-D lattice structure **32** and a plurality of electrically insulative containment sheets (not expressly shown to permit viewing of the 3-D lattice structure **32**) positioned on the remaining faces of the 3-D lattice structure **32.** In this view, the 3-D lattice structures **32** are shown as generic 3-D lattice structures to illustrate the variety of 3-D lattice structures that can be used to form such a structure. For example, the 3-D lattice structures **32** can be any of the 3-D lattice structures depicted in Figs. 1-2. The reinforced structure **30** also include an ER matrix phase **38** as described with regard to Figs. 1-2 filling the open spaces **36** in the reinforced structure **30.** The first face sheet **34** and second face sheet **35** and the plurality of containment sheets are collectively configured to contain the ER matrix phase **38** within the 3-D lattice structure **30.**

As discussed above, the matrix phase **38** comprises an ER material. ER materials can be suspensions of extremely fine, non-conducting but electrically active particles with primary dimensions (e.g., diameter or other longest dimension) ranging 5 nanometers up to 50 micrometers dispersed in an electrically insulating carrier fluid. The apparent viscosity of the ER materials is altered reversibly in response to an electric field applied to the matrix phase **38.** The electrical field is generated by the electrical potential applied between the first face sheet **34** and second face sheet **35.** When activated by the electric field, the ER material's yield point is determined by the electric field strength. After the yield point is reached, the ER material shears as a fluid (i.e., the incremental shear stress is proportional to the rate of shear). As a result, the ER material's viscosity can be controlled by adjusting the applied electric field. The fundamental properties of ER materials are based on particle size, density, base fluid properties, temperature and additives. A higher volume ratio of the dispersed particulates phase in the carrier fluid can offer the ER materials a considerably higher electrorheological effect. A person of ordinary skill will know how to select ER materials for the matrix phase **38** that are suitable for a particular application.

The first face sheet **34** and second face sheet **35** are electrically conductive materials positioned on two faces of the 3-D lattice structure and configured to generate an electrical field in the matrix phase **38** when an electric potential is applied between the face sheets **34,** 35. The electrical field in the matrix phase **38** alters reversibly the apparent viscosity of the matrix phase's **38** ER materials. For example, the first face sheet **34** and second face sheet **35** can be made in whole or in part from metals, electrically conductive polymers or composites, or other electrically conductive materials as long as the first face sheet **34** and second face sheet **35** are capable of generating the desired electrical field.

The plurality of electrically insulative containment sheets and the struts **12, 22, 32** are built from electrically insulative materials to facilitate formation of the desired electrical field in the matrix phase 38 between the electrically conductive first face sheet **34** and second face sheet **35.** The plurality of electrically insulative containment sheets and the struts **12, 22, 32** can, for example, be made from polymeric or composite materials that are electrical insulators.

Fig 4. shows a 3-D lattice structure **40** similar to that depicted in Fig. 2 that includes a strain limiting structure **49** positioned an open space **46** at or near the center of the 3-D lattice structure **40** such that strain limiting structure **49** will be embedded in the matrix phase **38.** The struts **42, 43** and the matrix **38** of Fig. 4 can be made from the same materials and have the same properties as discussed above with regard to the comparable elements of Figs. 1, 2, and 3. The strain limiting structure **49** of Fig. 4 can have a higher strength (and in some examples, higher hardness) than the matrix **48** to limit further the deformation of the struts **42, 43** of the 3-D lattice structure **40.** In some examples, the strain limiting structure **49** of the 3-D lattice structure **40** can be hollow or formed as a composite material, provided that the strain limiting structure **49** continues to have a higher strength (and in some examples, higher hardness) than the matrix **48.** As a result, a compressive or tensile load applied to the 3-D lattice structure **40** of Fig. 4, will initially (and mostly) be absorbed/distributed by the Poisson effect created by deformation of the matrix phase **48.** After some deformation of the lattice structure **40,** the struts **42, 43** would contact the strain limiting structure **49** in the center of each 3-D lattice structure **40.** The strain limiting structure **49** would provide much more resistance to deformation than the surrounding matrix phase **48.** This construction will give the 3-D lattice structure **40** a much higher ultimate strength because the struts **42, 43** would be mostly intact and subjected to supported bending rather than buckling. In addition to including the strain limiting structure **49** in the center of each 3-D lattice structure **40,** the struts **42, 43** can be designed to optimize the eventual interaction with it, i.e., the struts that would be subjected to compression could have an idealized shape for resistance to buckling while being bent around the solid object geometry. In some examples, the strain limiting structure **49** can be fixed to at least one of the plurality of struts **42, 43.**

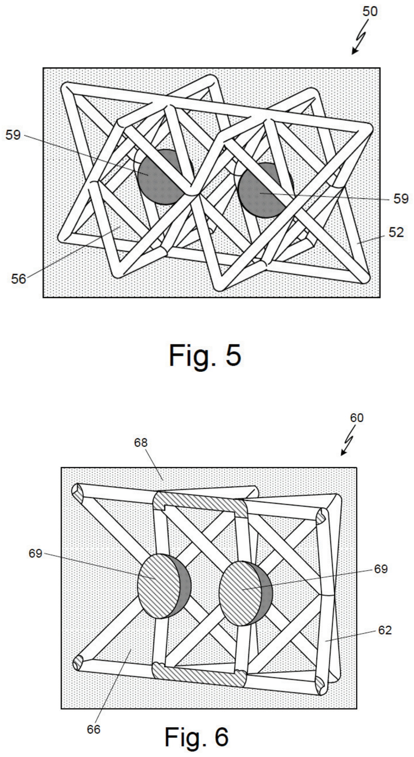

Fig. 5 shows a 3-D lattice structure **50** similar to that depicted in Fig. 4 that include two lattice structures. It should understood that a 3-D lattice structure like that shown in Fig.5 can include any number of lattice structures as desirable for a particular application. Similar to the structures of Fig. 4, the 3-D lattice structure **50** includes a strain limiting structure **59** positioned an open space **56** at or near the center of the 3-D lattice structure **50** such that strain limiting structure **59** will be embedded in the matrix phase **58.** In some examples, the strain limiting structure **59** can be fixed to at least one of the plurality of struts **52.**

Fig. 6 shows a 3-D lattice structure **60** similar to that depicted in Fig. 5 that includes two lattice structures. As with the structure of Fig. 5, it should understood that a 3-D lattice structure like that shown in Fig. 6 can include any number of lattice structures as desirable for a particular application. Similar to the structure of Fig. 5, the 3-D lattice structure **60** includes a strain limiting structure **69** positioned an open space **66** at or near the center of the 3-D lattice structure **60** such that the strain limiting structure **69** will be embedded in the matrix phase **58.** The primary difference between the structures of Fig. 6 and Fig. 5 is the shape of the strain limiting structure **69** compared to the strain limiting structure **59.** These differences illustrate that the shape of any of the strain limiting structures **49, 59, 69** described in this disclosure can be any shape suitable for a particular application and are not limited to the spheres depicted in Figs. 4 and 5 and the hemisphere depicted in Fig. 6. In some examples, the strain limiting structure **69** can be fixed to at least one of the plurality of struts **62.**

For all of the examples discussed with regard to Figs. 1 to 6, the desired strut **12, 22, 32, 42, 52,** and **62** shapes can be made with suitable additive manufacturing (AM) techniques (i.e., 3-D printing). The strain limiting structures **49, 59, 69** can also be made with AM techniques and can designed to control the ultimate failure strength and mode of the 3-D lattice structures. Similarly, the electrically conductive face sheets **34, 35** and the electrically insulative containment sheets can, in some examples, also be made using AM techniques. As shown in figs. 4 to 6, the struts **42, 52, 62** can be formed as rods and the strain limiting structures **49, 59, 69** of can be formed as a sphere or hemisphere. In some examples, though, the struts **42, 52, 62** can be formed without a uniform cross section along their respective lengths and can be axis asymmetric. Likewise, the strain limiting structures **49, 59, 69** can be any shape, including non-symmetric shapes, having any desired orientation. In addition, the strain limiting structures **49, 59, 69** can, in some examples, be a composites themselves to permit enhanced energy absorption. In another example, the matrix phase **18, 28, 38, 48, 58, 68,** electrically conductive face sheets, electrically insulative containment sheets, and/or strain limiting structures **49, 59, 69** can be made of fire retardant materials so the 3-D lattice structures of this disclosure can be used in fire resistant assemblies. Suitable fire retardant materials can include those deemed appropriate for a specific application, including but not limited to Tetrabromobisphenol A (TBBPA); Hexabromocyclododecane (HBCD); Ethane; 1,2-dibromo; Antimony oxide (Sb₂O₃); Triphenyl phosphate (TPP); Tricresyl phosphate (TCP).

For all of the examples discussed with regard to Figs. 1 to 6, the material properties for each component can be selected to provide desired performance in conjunction with all of the other properties of a 3-D composite structure. For example, the properties of interest for the struts **12, 22, 32, 42, 52,** and **62** can include: yield flexural/bending strength, ultimate flexural/bending strength, yield compressive strength, ultimate compressive strength, stiffness (Young's modulus), hardness, ductility (% elongation to failure), and toughness. The properties of interest for the matrix phase **18, 28, 38, 48, 58,** and **68** can include: resilience, viscosity (fluid), yield compressive strength, and ultimate compressive strength. The properties of interest for the strain limiting structures **49, 59, 69** can include: hardness, compressive strength, and stiffness. The properties of interest for the overall 3-D composite structure can include: Poisson's ratio, yield flexural/bending strength, ultimate flexural/bending strength, yield compressive strength, ultimate compressive strength, stiffness (Young's modulus), and fatigue limit.

The 3-D lattice structures of this disclosure are constructed to have a desirable combination of energy-absorption, toughness, ultimate strength, and stiffness. Using a multi-material AM machine (e.g., a multi-material 3D printer), the material used to form each component of the 3-D lattice structures can be selected to provide a selected level of performance. This can enable many custom uses or designs with very little added cost. The material use to form each component of the 3-D lattice structures can be printed and filled quickly, thus speeding up validation of any mechanical property analysis. The size, shape, and material of construction for each of the components (struts, matrix phase, and strain limiting structures) can be selected to meet requirements of particular applications. As discussed above, the strut cross-section can be non-circular and/or variable to achieve desired performance characteristics. Similarly, the strain limiting structures can be any shape and/or formed from a composite material. For example, the strain limiting structures can be gas filled to provide compressible cushion effect. The 3-D lattice structures can be formed from any suitable polyhedron shape. Combining metallic struts with a matrix phase made from a ductile metal with low melting point can allow for a metallic 3-D lattice structure useful for higher temperature applications.

### Discussion of Possible Embodiments

The following are non-exclusive descriptions of possible embodiments of the present invention.

A three-dimensional (3-D) composite structure includes a 3-D lattice structure having a plurality of electrically insulative struts, a matrix phase surrounding the 3-D lattice structure, first and second electrically conductive face sheets positioned on two faces of the 3-D lattice structure, and a plurality of electrically insulative containment sheets positioned on all faces of the 3-D lattice structure that do not include the first and second face sheets. The matrix phase includes an electrorheological material. The first and second face sheets are positioned such that an electric potential applied between the first and second face sheets creates an electric field in the matrix phase that causes a desired reversible alteration to the viscosity of the matrix phase. The first and second face sheets and the plurality of containment sheets are collectively configured to contain the matrix phase within the 3-D lattice structure.

The 3-D composite structure of the preceding paragraph can optionally include any one or more of the following features, configurations and/or additional elements:
Further comprising a the strain limiting structure positioned at or near a center of the 3-D lattice structure and embedded within the matrix phase
The 3-D lattice structure has a polyhedral shape.

The polyhedral shape is a stellated octahedron.

The matrix phase comprises a material having a lower modulus and higher toughness than a material used to form the plurality of struts.

The strain limiting structure comprises a material having a higher strength that a material used to form the matrix phase.

The strain limiting structure is fixed to at least one of the plurality of struts.

The plurality of struts and the matrix phase are formed from fire-retardant materials.

A method of making a three-dimensional (3-D) composite structure includes the steps of: forming, using additive manufacturing techniques a 3-D lattice structure that comprises a plurality of electrically insulative struts, forming a matrix phase surrounding the 3-D lattice structure, positioning first and second electrically conductive face sheets on two faces of the 3-D lattice structure, and positioning a plurality of electrically insulative containment sheets on all faces of the 3-D lattice structure that do not include the first and second face sheets. The matrix phase comprises an electrorheological material. The first and second face sheets are positioned such that an electric potential applied between the first and second face sheets creates an electric field in the matrix phase that causes a desired reversible alteration to the viscosity of the matrix phase. The first and second face sheets and the plurality of containment sheets are collectively configured to contain the matrix phase within the 3-D lattice structure.

The method of the preceding paragraph can optionally include any one or more of the following features, configurations and/or additional elements:

The method further comprising forming, using additive manufacturing techniques, a strain limiting structure positioned at or near a center of the 3-D lattice structure and fixed to at least one of the plurality of struts.

The 3-D lattice structure has a polyhedral shape.

The polyhedral shape is a stellated octahedron.

The matrix phase comprises a material having a lower modulus and higher toughness than a material used to form the plurality of struts.

The strain limiting structure comprises a material having a higher strength that a material used to form the matrix phase.

The strain limiting structure wherein the strain limiting structure is fixed to at least one of the plurality of struts.

The plurality of struts and the matrix phase are formed from fire-retardant materials.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A three-dimensional (3-D) composite structure (30), comprising:
a 3-D lattice structure (32) that comprises a plurality of electrically insulative struts;
a matrix phase (38) surrounding the 3-D lattice structure (32), wherein the matrix phase (38) comprises an electrorheological material;
first and second electrically conductive face sheets (34, 35) positioned on two faces of the 3-D lattice structure (32), wherein the first and second face sheets (34, 35) are positioned such that an electric potential applied between the first and second face sheets (34, 35) creates an electric field in the matrix phase (38) that causes a desired reversible alteration to the viscosity of the matrix phase (38); and
a plurality of electrically insulative containment sheets positioned on all faces of the 3-D lattice structure (32) that do not include the first and second face sheets (34, 35), wherein the first and second face sheets (34, 35) and the plurality of containment sheets are collectively configured to contain the matrix phase (38) within the 3-D lattice structure (32).

2. The 3-D composite structure of claim 1, further comprising a strain limiting structure positioned at or near a center of the 3-D lattice structure (30) and embedded within the matrix phase (38).

3. The 3-D composite structure of claim 2, wherein the strain limiting structure comprises a material having a higher strength than a material used to form the matrix phase (38).

4. The 3-D composite structure of claim 2 or 3, wherein the strain limiting structure is fixed to at least one of the plurality of struts.

5. The 3-D composite structure of any preceding claim, wherein the 3-D lattice structure (32) has a polyhedral shape.

6. The 3-D composite structure of claim 5, wherein the polyhedral shape is a stellated octahedron.

7. The 3-D composite structure of any preceding claim, wherein the matrix phase (38) comprises a material (3D) having a lower modulus and higher toughness than a material (3D) used to form the plurality of struts.

8. The 3-D composite structure of any preceding claim, wherein the plurality of struts and the matrix phase (38) are formed from fire-retardant materials.

9. A method of making a three-dimensional (3-D) composite structure, comprising the steps of:
forming, using additive manufacturing techniques, a 3-D lattice structure (32) that comprises a plurality of electrically insulative struts;
forming a matrix phase (38) surrounding the 3-D lattice structure (32), wherein the matrix phase (38) comprises an electrorheological material;
positioning first and second electrically conductive face sheets (34, 35) on two faces of the 3-D lattice structure (32), wherein the first and second face sheets (34, 35) are positioned such that an electric potential applied between the first and second face sheets (34, 35) creates an electric field in the matrix phase (38) that causes a desired reversible alteration to the viscosity of the matrix phase (38); and
positioning a plurality of electrically insulative containment sheets on all faces of the 3-D lattice structure (32) that do not include the first and second face sheets (34, 35), wherein the first and second face sheets (34, 35) and the plurality of containment sheets are collectively configured to contain the matrix phase (38) within the 3-D lattice structure (32).

10. The method of claim 9, further comprising:
forming, using additive manufacturing techniques, a strain limiting structure positioned at or near a center of the 3-D lattice structure (32).

11. The method of claim 10, wherein the strain limiting structure comprises a material having a higher strength than a material used to form the matrix phase (38).

12. The method of claim 10 or 11, wherein the strain limiting structure is fixed to at least one of the plurality of struts.

13. The method of any of claims 9 to 12, wherein the 3-D lattice structure (32) has a polyhedral shape,
wherein, optionally, the polyhedral shape is a stellated octahedron.

14. The method of any of claims 9 to 13, wherein the matrix phase (38) comprises a material having a lower modulus and higher toughness than a material used to form the plurality of struts.

15. The method of any of claims 9 to 14, wherein the plurality of struts and the matrix phase (38) are formed from fire-retardant materials.
